# FASCICULE DE BREVET EUROPEEN

(11) **EP 3 725 419 B1**
(45) Date de publication et mention de la délivrance du brevet: **13.03.2024**
(21) Numéro de dépôt: 20170084.6
(22) Date de dépôt: 17.04.2020
(51) Int. Cl.: B05B 12/04, B41J 3/407, B25J 9/00, B05B 12/18, B05B 7/04, B05B 1/08, B05B 15/65, B05B 13/04

(54) **APPLICATEUR DE PRODUIT DE REVÊTEMENT, INSTALLATION D'APPLICATION COMPRENANT UN TEL APPLICATEUR ET PROCÉDÉ D'APPLICATION AU MOYEN D'UN TEL APPLICATEUR**
APPLIKATOR FÜR BESCHICHTUNGSMITTEL, AUFTRAGSANLAGE, DIE EINEN SOLCHEN APPLIKATOR UMFASST, UND AUFTRAGSVERFAHREN MITHILFE DIESES APPLIKATORS
COATING PRODUCT APPLICATOR, INSTALLATION FOR APPLICATION COMPRISING SUCH AN APPLICATOR AND METHOD FOR APPLICATION USING SUCH AN APPLICATOR

(30) Priorité: 19.04.2019 FR 1904218
(43) Date de publication de la demande: 21.10.2020
(60) Demande divisionnaire: 22213986.7
(73) Titulaire: Exel Industries, 51200 Epernay (FR)
(72) Inventeur: CHOUAN, Nicolas, 75009 Paris (FR); MEDARD, Cyrille, 75009 Paris (FR)
(74) Mandataire: Lavoix

(56) Documents cités:
- EP-A1- 1 884 365
- EP-A1- 3 292 914
- EP-A2- 2 139 656
- WO-A1-2010/046064
- WO-A1-2015/036235
- WO-A2-2008/125967
- US-A1- 2011 012 961

## Description

La présente invention concerne un applicateur de produit de revêtement qui comprend un des buses d'impression comportant chacune un canal de sortie débouchant vers l'aval par un orifice d'éjection de produit de revêtement.

La demande de customisation de la décoration apposée sur des objets tend à augmenter sensiblement. Par exemple, le revêtement de carrosseries de véhicule automobile bi-ton devient de plus en plus fréquent. Ainsi, de nombreux véhicules automobiles présentent des montants de porte de couleur noire, alors que le reste de la carrosserie est peint avec une autre couleur. Pour des véhicules haut de gamme, du noir de style est appliqué sur les montants de porte, sur des surfaces délimitées par des caches. Une autre technique consiste à poser, à la main, des autocollants noirs sur les montants. Ces deux modes de réalisation de montants de couleur noire sont consommateurs de temps, exigent une main d'oeuvre qualifiée et sont onéreux. Des problèmes analogues se posent lors de la réalisation d'un motif décoratif sur une carrosserie, par exemple une bande de couleur noire sur le toit ou le capot de la carrosserie, voire un toit complet de couleur différente du reste de la carrosserie.

L'application de peinture au moyen de têtes d'impression comprenant des buses d'impression permet d'atteindre une certaine précision d'application de peinture. Comme envisagé dans EP-A-1884365, EP-A-3292914, WO-A-2010/046064 ou WO-A-2015/036235, des têtes d'impression peuvent être montées côte-à-côte et articulées ou montées de façon ajustable l'une par rapport à l'autre, pour suivre la géométrie d'une surface à revêtir. Selon une autre approche connue de WO-A-2008/125967, un applicateur peut porter plusieurs buses orientées différemment et activées simultanément pour revêtir une surface interne d'un objet concave.

Il est également connu de US-A-2011/0012961 d'utiliser un portique disposé au-dessus d'un convoyeur transportant des pièces à revêtir et équipé de plaques qui définissent des orifices d'éjection de produit vers ces pièces. Une buse est prévue sur une traverse supérieure et sur chaque montant du portique. Ce matériel est encombrant et ne pourrait pas être monté sur un robot de revêtement d'une carrosserie de véhicule.

Toutefois, malgré l'utilisation d'un système goutte à goutte, d'un robot multiaxe précis déplaçant la tête d'impression et d'un automate rapide, avec un temps de scrutation de l'ordre de la milliseconde (ms), une bande de peinture appliquée sur une carrosserie présente des bords nets selon l'axe de déplacement de l'applicateur mais pas à ses extrémités. La ligne de départ de l'application, qui correspond à la zone d'activation des buses d'impression, et la ligne d'arrivée de la bande de peinture, qui correspond à l'arrêt ou à la désactivation de ces buses, sont dentelées, c'est-à-dire qu'elles présentent des irrégularités. On pourrait envisager d'utiliser les buses d'un autre applicateur pour créer une ligne transversale à une première passe d'application, avec un léger recouvrement, afin de lisser au maximum le phénomène de dentelure. Toutefois, dans ce cas, il se pose un problème d'accessibilité du robot à la zone d'application. Par exemple, si l'on considère une bande réalisée sur le toit de la carrosserie d'un véhicule automobile, un robot doit pouvoir atteindre la zone de pare-brise avant et la zone de pare-brise arrière pour appliquer une ligne transversale, selon la largeur du véhicule. En pratique, ceci est très difficile à mettre en oeuvre.

Si la station de revêtement dans laquelle est mise en oeuvre l'application d'une bande est en mode « tracking », c'est-à-dire que le convoyeur déplaçant les carrosseries de véhicule automobile ne s'arrête pas lors de l'application, le robot peut accéder à la partie avant du véhicule puis, après un laps de temps, à la partie arrière. Ce mode de fonctionnement n'est pas réellement compatible avec l'application précise de peinture, dans la mesure où l'on souhaite réaliser des bandes précisément définies selon l'axe convoyeur. De plus, la position du véhicule au cours du temps n'est pas définie de façon suffisamment précise pour créer des lignes de départ et d'arrivée totalement nettes. Dans ce cas, la vitesse du convoyeur n'est pas connue de façon très précise, en particulier à cause des ondulations dues à la régulation et au mouvement du moteur d'entrainement du convoyeur.

Si la station est en mode « stop and go », c'est-à-dire que la carrosserie est immobilisée dans une position donnée lors de l'application de peinture, le robot multiaxe supportant l'applicateur doit être équipé d'un septième axe robotique, en pratique constitué par un rail de déplacement du robot le long de l'axe de déplacement du convoyeur. Cette solution n'est également pas assez précise au regard du résultat escompté. Elle est également coûteuse en termes de temps de cycle, car elle nécessite de positionner le robot sur la zone de pare-brise avant, avant de peindre, puis de repositionner le robot sur la zone de pare-brise arrière, également avant de peindre.

Une telle problématique se pose également pour l'application de peinture bi-ton sur des éléments autres que de carrosseries de véhicule automobile complètes, notamment sur des pièces en matériau synthétique, telles que les pare-chocs, ou dans le domaine aéronautique, pour le revêtement des carlingues d'aéronefs.

La présente invention vise à résoudre ces problèmes en proposant un nouvel applicateur de produit de revêtement qui permet à la fois une application précise de produit de revêtement, y compris au niveau des lignes de départ et d'arrivée d'une bande ou d'un autre motif, tout en présentant un temps de cycle réduit par rapport aux solutions connues.

A cet effet, l'invention concerne un applicateur de produit de revêtement selon l'une des revendications 1 et 2

Grâce à l'invention, les buses d'impression disposées sur une face du corps de l'applicateur peuvent être utilisées pour certaines phases d'application de produit de revêtement, par exemple parallèlement à la plus grande dimension d'une bande de peinture à appliquer sur le toit de la carrosserie d'un véhicule automobile, alors que les buses d'impression réparties sur une deuxième face du même applicateur de buses d'éjection peuvent être utilisées pour réaliser les lignes de départ et d'arrivée d'une telle bande, avec une grande précision.

Selon les aspects, avantageux mais non obligatoires de l'invention, un tel applicateur peut incorporer une ou plusieurs caractéristiques des revendications 3 à 9.

Selon un autre aspect, l'invention concerne une installation d'application de produit de revêtement sur des objets à revêtir, qui comprend au moins un applicateur tel que mentionné ci-dessus, de préférence monté sur le bras d'un robot multiaxe prévu pour le déplacer par rapport aux objets à revêtir.

Selon un autre aspect, l'invention concerne un procédé d'application de produit de revêtement selon la revendication 11, au moyen d'un applicateur tel que mentionné ci-dessus.

Ce procédé permet d'appliquer un produit de revêtement avec une grande précision et de façon rapide.

De préférence, ce procédé incorpore les caractéristiques de la revendication 12.

L'invention sera mieux comprise et d'autres avantages de celle-ci seront mieux compris à la lumière de la description qui va suivre de deux modes de réalisation d'un applicateur, d'une installation et d'un procédé conformes à l'invention, donnés uniquement à titre d'exemple et faite en référence aux dessins annexés dans lesquels :
[Fig 1] La figure 1 est une représentation schématique de principe, en vue de face, d'une installation conforme à l'invention incorporant un applicateur conforme à l'invention ;
[Fig 2] La figure 2 est une vue en perspective de l'applicateur de l'installation de la figure 1 ;
[Fig 3] La figure 3 est une vue en élévation avec arrachement partiel du détail III à la figure 2 ;
[Fig 4] La figure 4 est une vue de côté de l'installation de la figure 1, lors d'une première étape d'un procédé d'application de produit de revêtement conforme à l'invention ;
[Fig 5] La figure 5 est une vue analogue à la figure 4, lors d'une deuxième étape du même procédé ; et
[Fig 6] La figure 6 est une vue en élévation, avec arrachement partiel, d'une partie d'un applicateur conforme à un deuxième mode de réalisation de l'invention.

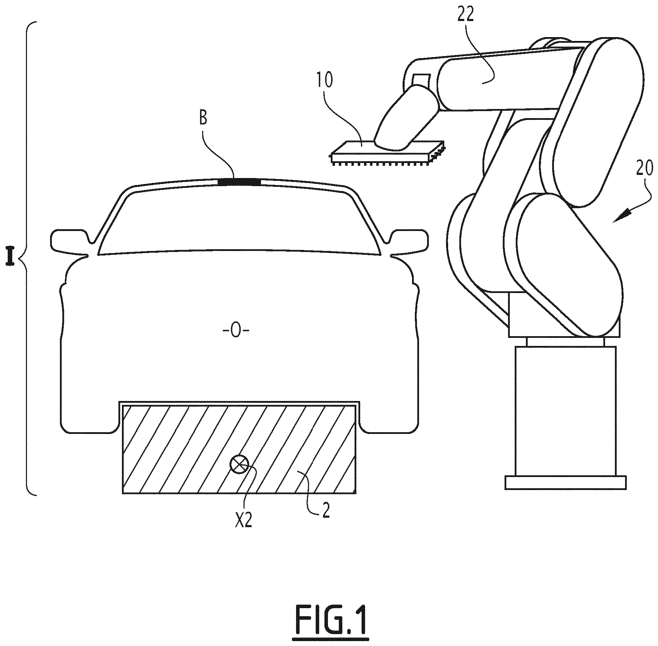

L'installation I représentée aux figures 1, 4 et 5 est prévue pour l'application de peinture sur des objets O qui, dans l'exemple des figures, sont des carrosseries de véhicule automobile. Plus précisément, dans cet exemple, l'installation I vise à permettre la création d'une bande B de couleur contrastée, par exemple noire, sur le toit d'une telle carrosserie.

En variante, les objets à revêtir peuvent être des parties de carrosseries de véhicule automobile, par exemple des pare-chocs ou, plus généralement, tout objet pouvant être revêtu, par exemple une partie de carlingue d'aéronef ou une caisse d'appareil électroménager, ces exemples n'étant pas limitatifs.

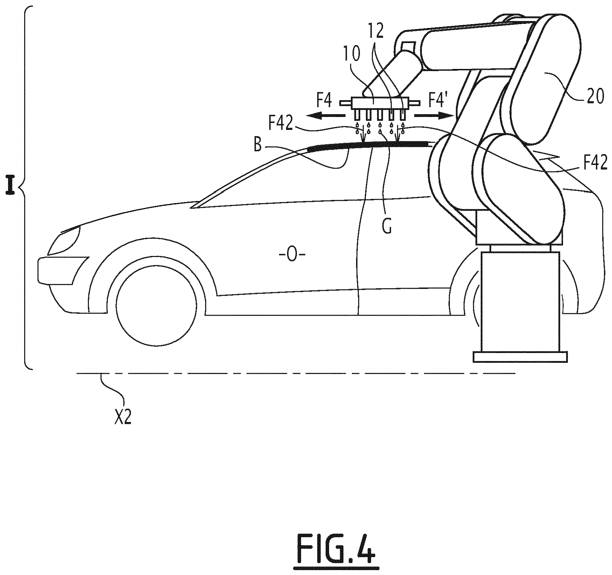

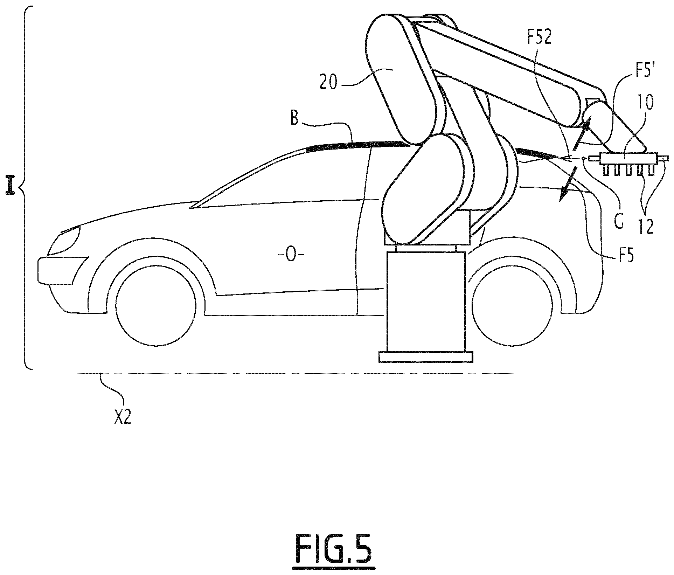

L'installation I comprend un convoyeur 2 prévu pour déplacer les objets O le long d'un axe de convoyage X2 perpendiculaire au plan de la figure 1 et parallèle aux plans des figures 4 et 5.

L'installation I comprend également un applicateur 10 monté à l'extrémité du bras 22 d'un robot multiaxe 20 disposé au voisinage du convoyeur 2.

L'applicateur 10 comprend plusieurs buses 12 qui sont identiques entre elles et qui appartiennent chacune à une tête d'impression 13.

L'applicateur 10 comprend un corps 14 qui supporte les buses 12 et qui constitue un élément structurel rigide permettant de positionner les buses 12 dans l'espace. De préférence, le corps 14 est monobloc. Dans l'exemple, le corps 14 est parallélépipédique 14 et définit une face avant 142, une face arrière 143 parallèle à la face avant 142, deux faces longitudinales 144 et 145 parallèles entre elles et deux faces transversales 146 et 147 parallèles entre elles. Les faces avant et arrière 142 et 143 sont perpendiculaires aux faces longitudinales 144 et 145, d'une part, et aux faces transversales 146 et 147 d'autre part. Les faces longitudinales 144 et 145 sont, par ailleurs, perpendiculaires aux faces transversales 146 et 147. Les faces 144 à 147 sont adjacentes à la face 142. La face avant 142 du corps 14 est tournée vers un objet à revêtir lorsque l'applicateur 10 fonctionne, pour réaliser la partie principale d'un motif, en appliquant un produit de revêtement sur un objet O.

Les buses 12 sont montées de façon rigide sur le corps 14. Plus précisément, quatre rangés de seize buses 12 sont disposées sur la face avant 142 du corps 14, ces buses étant en saillie de cette face avant qui est plane.

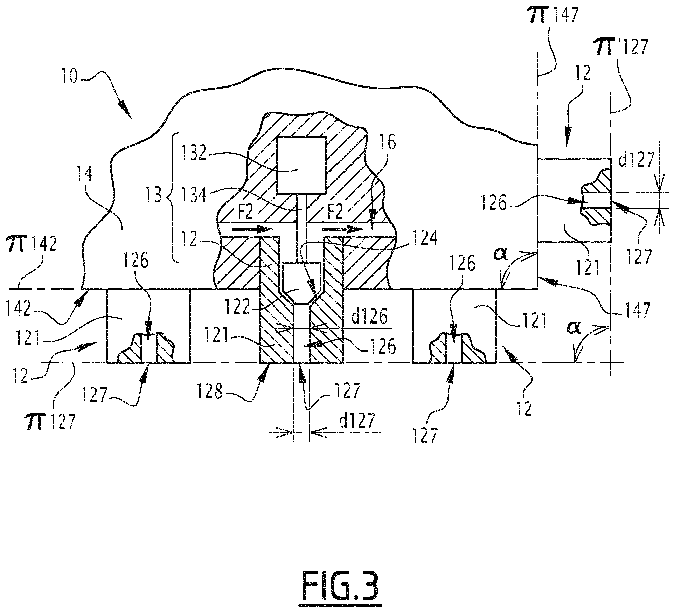

Comme il ressort de la figure 3, chaque buse 12 appartient à une tête d'impression 13 qui comprend, en outre, un organe de commande 132, par exemple de type composant piézoélectrique, et une tige 134. Chaque buse 12 comprend un pointeau 122 piloté par l'organe de commande 132 de la tête d'impression 13 à laquelle appartient la buse. Le pointeau 122 est relié au composant 132 par la tige 134.

La peinture à appliquer s'écoule dans un canal 16 ménagé dans le corps 14 et circule, d'une buse 12 à l'autre, dans le sens des flèches F2. Le canal 16 constitue un moyen d'alimentation commun de différentes buses 12 situées sur la face 142 de l'applicateur 10.

On note 121 la partie d'une buse 12 qui est en saillie d'une face du corps 14. A l'intérieur de la partie 121 d'une buse, un siège 124 est ménagé contre lequel le pointeau 122 de la buse vient sélectivement en appui, en étant commandé par le composant 132.

Un canal de sortie 126 est ménagé dans chaque buse 12, en aval de son pointeau 122 et de son siège 124. Ce canal de sortie débouche vers l'extérieur, à l'opposé du pointeau 122, par un orifice d'éjection 127 ménagé dans une face frontale 128 de la buse 12, plus précisément dans la face frontale 128 de sa partie 121.

Ainsi, chaque buse 12 constitue une buse d'impression destinée à éjecter sélectivement de la peinture par son orifice d'éjection 127.

On note d126 le diamètre du canal de sortie 126 d'une buse 126 et d127 le diamètre de l'orifice d'éjection 127 de cette buse. Par exemple, les diamètres d26 et d 27 sont égaux. Le diamètre d127 est compris entre 50 micromètres (µm) et 500 µm, de préférence entre 100 et 200 µm, de préférence encore de l'ordre de 150 µm.

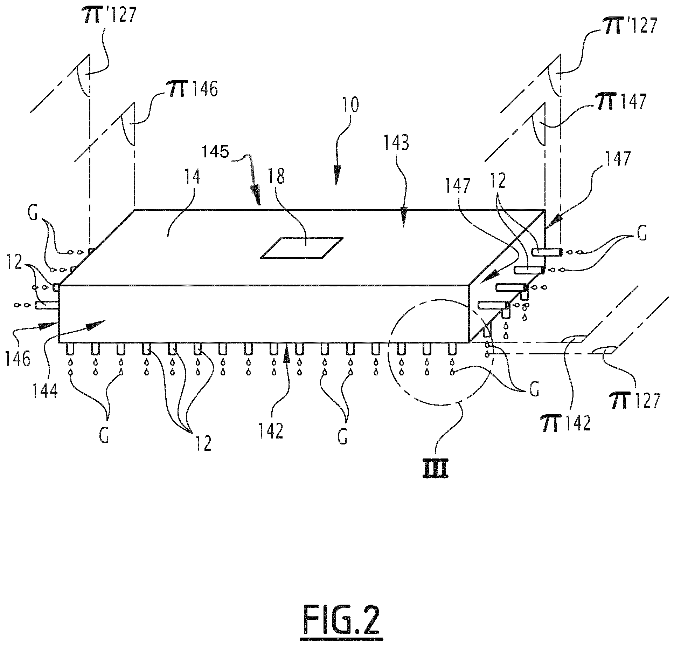

Ainsi, chaque buse 12 est capable de décharger à partir de son orifice d'éjection 127, une succession de gouttelettes G. A la figure 2, ces gouttelettes G sont représentées comme sortant toutes en même temps des buses d'impression 12, ce qui ne correspond pas au procédé décrit ci-après mais permet de repérer les trajets d'écoulement de ces buses.

On note, π142 le plan principal de la face avant 142 qui est plane. On note π127 le plan dans lequel sont disposés les orifices d'éjection 127 des buses 12 disposées sur la face avant 142. Les plans π142 et π127 sont parallèles et les orifices 127 sont eux-mêmes répartis sur la face avant 142, au voisinage de celle-ci.

La surface transversale 147 est équipée de quatre buses 12 identiques à celles montées sur la face avant 142, qui constituent une rangée de buses d'impression et qui font également saillie par rapport à cette surface 147, laquelle est plane et dont on note π147 le plan principal.

Les orifices d'éjection 127 des buses 12 montées sur la surface 147 s'étendent dans un plan π'127 parallèle au plan π147 et peuvent être considérés comme également répartis sur la surface 147, au voisinage de celle-ci.

De la même façon, quatre buses d'impression 12 sont montées sur la surface transversale 146 qui est plane et dont on note π146 le plan principal. Les orifices d'éjection de ces buses 12 s'étendent dans un plan π"127 parallèle au plan π146. Ces orifices peuvent être considérés comme également répartis sur la surface 146, au voisinage de celle-ci

Les plans π142 et π147, d'une part, π142 et π146, d'autre part, ne sont pas parallèles entre eux. Ainsi, les orifices de sortie 127 des buses respectivement prévues sur les faces 142, 146 et 147 s étendent dans au moins deux dimensions non parallèles.

En ce sens, l'applicateur 10 peut être qualifié de tête multi-buses-multi-dimensions (MBMD). Il constitue un applicateur de produit de revêtement qui permet d'appliquer un tel produit avec un haut degré de précision, ainsi qu'il ressort des explications qui suivent.

On note α un angle défini, à l'intérieur du corps 14, 10 entre les plans π142 et π147.

Dans l'exemple des figures 1 à 5, cet angle α vaut 90°.

En pratique, cet angle α peut être compris entre 30° et 150 °, de préférence entre 60 et 90°. Des valeurs préférentielles de cet angle sont 60°, 90° et 120 °.

Comme les plans π127 et π'127 sont respectivement parallèles aux plans π142 et π147, l'angle α est également l'angle entre les plans π127 et π'127, mesuré du côté de ces plans tournés vers le corps 14.

Dans la mesure où l'angle α ne vaut pas 180°, les buses disposées 12 sur les faces 142 et 147, qui éjectent respectivement de la peinture perpendiculairement aux plans π127 et π'127, permettent d'éjecter de la peinture dans deux direction non parallèles.

La situation est la même pour les buses d'impression 12 respectivement situées sur les faces 142 et 146.

Lorsqu'il convient de créer une bande B en formant des motifs sur le toit d'une carrosserie O de véhicule automobile, l'applicateur 10 est amené par le robot multiaxe 20 au-dessus de la zone du toit à revêtir, puis l'applicateur 10 est déplacé parallèlement à l'axe longitudinal de la carrosserie, qui est en pratique parallèle à l'axe X2, comme représenté par les flèches F4 et F4' à la figure 4.

Lors de ces déplacements, les buses 12 disposées sur la face avant 142 du corps 14 sont activées.

En d'autres termes, les pointeaux 122 de ces buses 12 sont écartés de leurs sièges 124 par les actionneurs 132 et les tiges 134 des têtes d'impression 13 correspondantes. Les canaux de sorties 126 de ces buses sont alimentés en peinture et de la peinture est éjectée par leurs orifices d'éjection respectifs 127, qui sont dans le plan π127, en direction du toit de la carrosserie O, comme représenté par les gouttelettes G qui s'écoulent dans le sens des flèches F42 à la figure 4. Cette technique d'impression permet de constituer, sur le toit du véhicule, une bande B dont les bords longitudinaux, parallèles au sens de déplacement de l'applicateur selon les flèches F4 et F4', sont bien définis et rectilignes.

Ainsi, dans un procédé d'application de peinture sur un objet O tel que la carrosserie représentée aux figures 1, 4 et 5, une première étape consiste à réaliser la bande B en déplaçant l'applicateur 10 dans le sens des flèches F4 et F4' à la figure 4, tout en alimentant les buses 12 dont les orifices d'éjection 127 sont situés dans le plan π127.

Ensuite, pour réaliser les bordures transversales de la bande B et dans une deuxième étape, le robot 20 amène la face transversale 147 de l'applicateur 10 en regard du bord arrière du toit de la carrosserie et déplace cet applicateur 10 perpendiculairement à l'axe X2, dans le des flèches F5 et F5' à la figure 5, tout en activant les buses 12 montées sur cette face transversale 147, ce qui a pour effet de décharger des gouttelettes G de peinture en direction du bord du toit à partir des orifices d'éjection 127 de ces buses situés dans le plan π'127, dans le sens de la flèche F52 à la figure 5. Ceci permet de constituer, à l'extrémité arrière de la bande B une bordure transversale nette et sans dentelure.

Le passage de l'applicateur 10 de la position de la figure 4 à celle de la figure 5 est rapide et facile à mettre en oeuvre par le robot multiaxe 20, notamment car les faces 142 et 147 sont adjacentes.

Une opération du même type est ensuite effectuée, dans la même deuxième étape du procédé, au niveau du bord avant de la bordure B, en activant les quatre buses 12 disposées sur la face transversale 146 du corps 14, qui éjectent de la peinture à travers leurs orifices d'éjection 127 situés dans le plan π"127.

En variante, l'ordre de mise en oeuvre des sous-étapes de la deuxième étape, consistant à créer les bordures transversales avant et arrière de la bande B, peut être inversé.

Selon une autre variante, la réalisation d'une bordure transversale peut être effectuée seulement à l'avant ou seulement à l'arrière de la bande B.

Au cours du procédé d'application de la peinture représenté aux figures 4 et 5, la distance d'application, c'est-à-dire la distance mesurée entre les orifices d'éjection 127 des buses d'impression 12 actives et la surface du toit de l'objet O en cours de revêtement, est avantageusement comprise entre 5 et 50 mm. Ceci permet d'augmenter le taux de transfert de peinture et de réduire l'éloignement de l'overspray, c'est-à-dire du nuage de peinture diffus, par rapport à l'empreinte du spray principal, c'est-à-dire du nuage de peinture dirigé au principal sur la carrosserie. Ceci permet d'assurer que les gouttes G de peinture non contrôlées se déposent au plus près possible de la zone de couverture du spray principal, donc des gouttes sous contrôle, destinées à constituer la bande B.

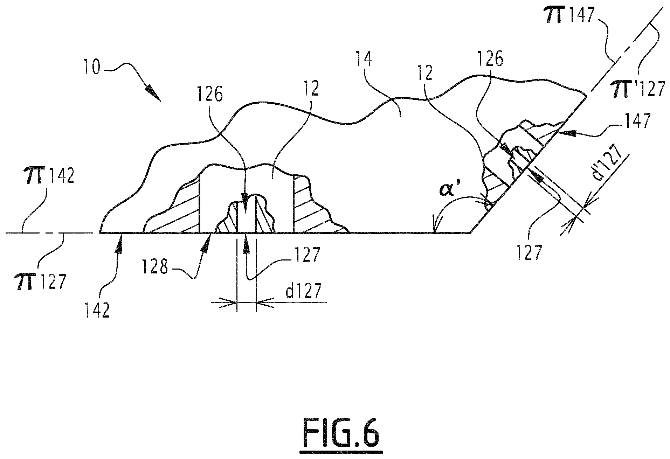

Dans le deuxième mode de réalisation de l'invention représenté à la figure 6, les éléments analogues à ceux du premier mode de réalisation portent les mêmes références. Dans ce qui suit, on ne décrit que ce qui distingue ce mode de réalisation du précédent.

Dans ce mode de réalisation, les buses 12 sont complètement intégrées à l'intérieur du corps 14 de l'applicateur 10. En d'autres termes, les surfaces frontales 128 des buses 12, dans lesquelles sont ménagés les orifices d'éjection 127, sont afférentes avec les faces latérales du corps 14, notamment les faces frontales 142 et transversale 147 représentées à la figure 6. En d'autres termes, les plans π142 et π127 sont confondus, de même que les plans π147 et π'127.

Comme précédemment, les plans π142 et π147 ne sont pas parallèles, de même que les plans π127, π'127. Ainsi, les buses 12 respectivement disposées sur les surfaces 142 et 147 permettent d'éjecter de la peinture dans deux direction non parallèles.

Ici, l'angle α défini comme dans le premier mode de réalisation vaut 120°.

Dans ce mode de réalisation, les buses d'impression 12 disposées sur la face 142 sont identiques entre elles et les buses d'impression 12 disposées sur la face 147 sont identiques entre elles, mais le diamètre d127 des orifices d'éjection 127 des buses d'impression 12 disposées sur la surface 142 présentent une première valeur, alors que le diamètre d'127 des orifices 127 des buses 12 disposées sur la surface 147 présente une deuxième valeur, inférieure à la première valeur. En d'autres termes, des orifices d'éjection 127 des buses 12 disposées sur la face transversale 147 sont plus fins que les orifices d'éjection 127 des buses 12 disposées sur la face frontale 142. Ceci peut être rapproché du fait que, lorsque les buses 12 qui équipent la face 142 sont utilisées, on réalise une surface d'aire relativement importante, pour laquelle un débit de peinture relativement important est nécessaire, comme cela ressort des explications relatives à la première étape du procédé mentionné ci-dessus. Au contraire, lorsqu'on réalise une bordure transversale de la bande B dans le cadre de la deuxième étape du procédé, une précision plus importante est nécessaire, et la surface à revêtir est d'aire inférieure. En effet, plus le diamètre d127 ou d'127 est petit, plus les gouttelettes sortant de l'orifice d'éjection 127 sont petites et plus de la netteté du bord réalisé est franche.

On comprend que les buses d'impression 12 disposées sur les différentes faces du corps 14 sont utilisées à des moments différents lors de la mise en oeuvre d'un procédé d'application de produit de revêtement. C'est pourquoi, il est prévu que les buses d'impression dont les orifices d'éjection sont répartis sur deux faces distinctes du corps 14 sont activées indépendamment les unes des autres, lorsque l'applicateur 10 est en fonction. Par exemple, il est possible de prévoir qu'un canal ou des canaux de circulation de peinture commun(s) 16 soit prévu pour alimenter les buses 12 montées sur la surface 142, alors qu'un autre canal comparable est prévu pour alimenter les buses 12 prévues sur la face 146 et qu'encore un autre canal comparable est prévu pour alimenter les buses 12 prévues sur la face 147. L'alimentation en peinture de ces différents canaux est régulée par des vannes, de préférence intégrées au corps 14, pilotées indépendamment les unes des autres.

En outre, les différents actionneurs 132 des têtes d'impression 13 incluant les différents buses 12 peuvent être pilotés indépendamment les uns des autres.

Sur une ligne de peinturage de carrosseries de véhicule automobile, selon les modèles de carrosserie et les motifs à réaliser, on peut être amené à revêtir des surfaces d'aire très différentes avec un applicateur du type de l'applicateur 10. Par exemple, une bande décorative de capot peut être réalisée avec une largeur de 100mm sur une longueur de 1m, ce qui correspond à une aire de 0,1m², alors que revêtir un toit entier revient à recouvrir une surface d'environ 2mx2m, soit 4m². L'applicateur 10 pourrait dont être sélectionné en fonction de l'utilisation prévue.

Pour ce faire, on peut prévoir que l'applicateur 10 est équipé d'une interface 18 prévue sur sa face arrière 143 et permettant son montage/démontage rapide à l'extrémité du bras 22 du robot 20. Cette interface permet de réaliser une connexion fluidique et électrique de l'applicateur 10 avec le robot 20. Par exemple, l'interface 10 peut fonctionner avec un système de clipsage magnétique ou selon toute autre méthode appropriée.

Dans ce cas, différents applicateurs 10 sont stockés dans un magasin, dans la zone d'activité du robot 20, par exemple au pied de celui-ci. Chaque applicateur est prévu pour appliquer de la peinture avec un débit appartenant à une gamme de débits, donc prévu pour revêtir une surface d'aire comprise dans une gamme d'aires, pendant le temps alloué pour mettre en oeuvre le procédé de l'invention. Ceci permet au robot 20 de charger l'applicateur 10 le plus adapté au motif à réaliser sur la carrosserie de véhicule entrant dans sa zone de travail.

Dans la description ci-dessus, l'applicateur 10 est décrit dans le cas où des buses d'impression 12 sont prévues sur trois faces du corps 14, à savoir les faces 142, 146 et 147. En variante, les buses 12 peuvent être prévues sur seulement deux de ces faces ou, au contraire, sur quatre, cinq ou six de ces faces, étant précisé ici que, de préférence, la face arrière 143 n'est pas équipée de buses 12.

L'invention est décrite ci-dessus dans le cas de l'application de peinture sur une carrosserie de véhicule automobile. Elle est particulièrement adaptée à l'application de peinture de type « base coat », c'est-à-dire une couche de couleur avec ou sans effet, ainsi qu'à l'application de vernis mono ou bi-composant. L'application d'un apprêt est également envisageable.

En variante, l'applicateur 10 peut être utilisé pour appliquer une encre ou tout autre produit de revêtement.

Lorsque le produit appliqué est bi- ou multi-composants, et selon une variante non représentée de l'invention, un mélangeur statique est intégré à l'installation I, plus précisément à l'intérieur du corps 14, sur le trajet du canal 16, juste en amont des buses 12.

Selon un aspect optionnel de l'invention, un air de guidage additionnel peut être amené au niveau de la face frontale 128 de chaque buse 12 afin de contenir les gouttes G sortant des orifices d'éjection 127. Cet air de guidage additionnel peut être éjecté sous la forme d'une lame d'air, c'est à dire d'un rideau d'air agissant comme une frontière que ne peuvent pas franchir les gouttelettes G, d'un anneau d'air ou de plusieurs jets d'air conformés avec une forme en vortex, convergente ou divergente en direction de l'axe du canal de sortie 126 de chaque buse. Cet air de guidage additionnel peut être amené au voisinage de buses 12 de façon individualisée ou pour un groupe de buses, par exemple, une ligne de buses, une colonne de buses ou une matrice de buses, voire de façon groupée pour toutes les buses disposées sur une face de du corps 14 l'applicateur 10.

Pour améliorer, le rendement du dépôt de l'application obtenue avec l'applicateur 10, un système de charge électrostatique du produit de revêtement appliqué peut être prévu, ce système étant à charge interne et/ou à charge externe, ce qui permet d'accélérer les gouttes G sortant des orifices d'éjection 127 et de les déposer sur la surface à revêtir qui est reliée à la masse. Un tel système électrostatique peut être prévu individuellement pour chaque buse 12, pour un groupe de buses, par exemple par ligne, par colonne ou pour une matrice de buses ou sous la forme d'un unique système électrostatique prévu pour toutes les buses de l'applicateur 10.

Les nombres de buses 12 mentionnés indiqués ci-dessus et montrés sur les figures sont indicatifs. En variante, ils peuvent être différents. De préférence, plusieurs buses d'impression 12 sont prévues sur une première face du corps 14, par exemple la face 142, pour être utilisées au cours de la première étape du procédé. Ces buses sont, de préférence disposées en rangées et en colonnes. Une ou plusieurs buses sont prévues sur une autre face, par exemple la face 146 ou 147, pour la deuxième étape. Le nombre de buses prévues sur la première face du corps 14 est différent, en pratique supérieur, au nombre de buses prévues sur l'autre face.

En variante, le corps 14 de l'applicateur 10 peut être supporté par un dispositif autre qu'un robot multiaxe, pour autant que ce dispositif permet de mettre en oeuvre les deux étapes du procédé de l'invention. Par exemple, une table croisée peut être utilisée pour une application sur des objets parallélépipédiques

En variante, l'installation I comprend plusieurs applicateurs 10.

En variante, le corps 14 peut avoir une forme autre que parallélépipédique.

Selon une autre variante, le corps 14 peut être formé de plusieurs parties assemblées de façon rigide, c'est-à-dire sans possibilité de mouvement relatif entre elles.

Si les faces du corps 14 sur lesquelles sont montées les buses d'impression 12 ne sont pas planes, les plans principaux π142, π146 et π147 sont définis comme des plans moyens de ces faces, de même que les plans π127, π'127 et π"127. Tel est notamment le cas si l'applicateur est utilisé pour appliquer une peinture ou un vernis sur des encadrements ou contours de porte, qui peuvent avoir une section présentant plusieurs côtés reliés par des rayons qui peuvent être peints en même temps.

L'invention est décrite ci-dessus lors de sa mise en oeuvre pour la création d'une bande. Elle est toutefois applicable pour la création d'autres motifs sur tout objet à revêtir.

Les modes de réalisation et variantes envisagés ci-dessus peuvent être combinés pour générer de nouveaux modes de réalisation de l'invention, tant que ces nouveaux modes de réalisation sont couverts par le texte soit de la revendication 1, soit de la revendication 2, soit de la revendication 10, soit de la revendication 12.

## Revendications

1. Applicateur (10) de produit de revêtement comprenant des buses d'impression (12) comportant chacune un canal de sortie (126) débouchant vers l'aval par un orifice (127) d'éjection de produit de revêtement, les buses d'impression (12) étant réparties sur au moins deux faces (142, 146, 147) d'un corps rigide (14) de l'applicateur (10), les orifices d'éjection (127) de ces buses s'étendant selon au moins deux plans non parallèles (π127, π'127, π"127), l'applicateur étant **caractérisé en ce que** le corps rigide (14) est parallélépipédique et définit une face avant (142), une face arrière (143) parallèle à la face avant, deux faces longitudinales (144, 145) parallèles entre elles et perpendiculaires aux faces avant et arrière, et deux faces transversales (146, 147) parallèles entre elles et perpendiculaires aux faces avant, arrière et longitudinales, les faces longitudinales et transversales étant adjacentes à la face avant et **en ce que** l'applicateur comprend plusieurs premières buses d'impression (12), dont les orifices d'éjection (127) sont répartis sur la face avant (142) du corps rigide (14), et au moins une deuxième buse d'impression (12), dont l'orifice de sortie (127) est sur une face transversale (146, 147) du corps rigide, et **en ce que** le nombre de premières buses est différent du nombre de deuxième(s) buse(s).

2. Applicateur (10) de produit de revêtement comprenant des buses d'impression (12) comportant chacune un canal de sortie (126) débouchant vers l'aval par un orifice (127) d'éjection de produit de revêtement, les buses d'impression (12) étant réparties sur au moins deux faces (142, 146, 147) d'un corps rigide (14) de l'applicateur (10), les orifices d'éjection (127) de de ces buses s'étendant selon au moins deux plans non parallèles (π127, π'127, π"127), l'applicateur étant **caractérisé en ce que** le corps rigide (14) est globalement parallélépipédique et définit une face avant (142), une face arrière (143) parallèle à la face avant, deux faces longitudinales (144, 145) parallèles entre elles et perpendiculaires aux faces avant et arrière, et deux faces transversales (146, 147) dont au moins une est non perpendiculaire à la face avant, les faces longitudinales et transversales étant adjacentes à la face avant et **en ce que** l'applicateur comprend plusieurs premières buses d'impression (12), dont les orifices d'éjection (127) sont répartis sur la face avant (142) du corps rigide (14), et au moins une deuxième buse d'impression (12), dont l'orifice de sortie (127) est sur la face transversale (147) du corps rigide non perpendiculaire à la face avant (142), et **en ce que** le nombre de premières buses est différent du nombre de deuxième(s) buse(s).

3. Applicateur selon la revendication 2, **caractérisé en ce que** les deux plans (π127, π'127, π"127) forment, entre eux et du côté du corps rigide (14) de l'applicateur (10), un angle (α) non droit compris entre 30° et 150°, de préférence entre 60° et 120°, de préférence égal à 60° ou 120°.

4. Applicateur selon l'une des revendications précédentes, **caractérisé en ce que** les buses d'impression (12) réparties sur les faces avant et transversale (142, 146, 147) du corps rigide (14) sont du même type et ont des orifices d'éjection de dimensions identiques (d127).

5. Applicateur selon l'une des revendications 1 à 2, **caractérisé en ce que** les buses d'impression (12) réparties sur les faces avant et transversale (142, 146, 147) du corps sont de même type et ont, sur chaque face, des orifices d'éjection (127) de dimensions identiques (d127) et, entre deux faces, des orifices d'éjection de dimensions différentes (d127, d'127).

6. Applicateur selon l'une des revendications précédentes, **caractérisé en ce que** les buses d'impression (12) réparties sur deux faces distinctes du corps rigide (14) sont activées indépendamment les unes des autres lorsque l'applicateur (10) est en fonctionnement.

7. Applicateur selon l'une des revendications précédentes, **caractérisé en ce que** le corps rigide (14) est monobloc.

8. Applicateur selon l'une des revendications 1 à 6, **caractérisé en ce que** le corps rigide (14) est formé de plusieurs parties assemblées de façon rigide, sans possibilité de mouvement relatif entre elles.

9. Applicateur selon l'une des revendications précédentes destiné à l'application d'un produit de revêtement bi- ou multi-composant, **caractérisé en ce qu'**il comprend un mélangeur intégré dans le corps rigide (14) de l'applicateur, en amont des buses d'impression (12).

10. Installation (I) d'application de produit de revêtement sur des objets (O) à revêtir, **caractérisée en ce qu'**elle comprend au moins un applicateur (10) selon l'une des revendications précédentes, de préférence monté sur le bras (22) d'un robot multiaxe (20) prévu pour le déplacer par rapport aux objets à revêtir.

11. Procédé d'application de produit de revêtement sur un objet (O) à revêtir, au moyen d'un applicateur (10) selon l'une des revendications 1 à 9, **caractérisé en ce qu'**il comprend au moins les étapes suivantes consistant à:
a) réaliser un motif (B) avec le produit de revêtement, en déplaçant l'applicateur (10) selon un premier axe de déplacement (F4, F4'), alors que des premières buses d'impression (12) réparties sur une première face (142) du corps rigide (14) de l'applicateur, sont actives; et
b) réaliser au moins une bordure transversale du motif, en déplaçant l'applicateur selon un deuxième axe (F5, F5') perpendiculaire au premier axe, alors que des deuxièmes buses d'impression réparties sur une deuxième face (146, 147) du corps rigide (14), sont actives.

12. Procédé selon la revendication 11, **caractérisé en ce que**, lors des étapes a) et/ou b), la distance d'application, entre les orifices d'éjection (127) des buses d'impression (12) actives et la surface d'un objet (O) en cours de revêtement, est comprise entre 5 et 50 mm.

## Patentansprüche

1. Applikator (10) für ein Beschichtungsmittel, der Druckdüsen (12) umfasst, die jeweils einen Ausgangskanal (126) aufweisen, der stromabwärts in eine Ausstoßöffnung (127) für das Beschichtungsmittel mündet, wobei die Druckdüsen (12) auf mindestens zwei Seiten (142, 146, 147) eines starren Körpers (14) des Applikators (10) verteilt sind, wobei die Ausstoßöffnungen (127) dieser Düsen sich entlang mindestens zweier nicht paralleler Ebenen (π127, π'127, π"127) erstrecken, wobei der Applikator **dadurch gekennzeichnet ist, dass** der starre Körper (14) im Wesentlichen quaderförmig ist und eine Vorderseite (142), eine parallel zur Vorderseite verlaufende Rückseite (143) sowie zwei parallel zueinander und senkrecht zu Vorder- und Rückseite verlaufende Längsseiten (144, 145) definiert und zwei Querseiten (146, 147), von denen mindestens eine nicht senkrecht zur Vorderseite ist, wobei die Längs- und Querseiten an die Vorderseite angrenzen, und dass der Applikator mehrere erste Druckdüsen (12) umfasst, deren Austrittsöffnungen (127) über die Vorderseite (142) des starren Körpers (14) verteilt sind, und mindestens eine zweite Druckdüse (12), deren Austrittsöffnung (127) sich an einer Querseite (146, 147) des starren Körpers befindet, und dass die Anzahl der ersten Düsen von der Anzahl der zweiten Düse(n) verschieden ist.

2. Applikator (10) für ein Beschichtungsmittel, der Druckdüsen (12) umfasst, die jeweils einen Ausgangskanal (126) aufweisen, der stromabwärts in eine Ausstoßöffnung (127) für das Beschichtungsmittel mündet, wobei die Druckdüsen (12) auf mindestens zwei Seiten (142, 146, 147) eines starren Körpers (14) des Applikators (10) verteilt sind, wobei die Ausstoßöffnungen (127) dieser Düsen sich entlang mindestens zweier nicht paralleler Ebenen (π 127, π'127, π"127) erstrecken, wobei der Applikator **dadurch gekennzeichnet ist, dass** der starre Körper (14) im Wesentlichen quaderförmig ist und eine Vorderseite (142), eine parallel zur Vorderseite verlaufende Rückseite (143) sowie zwei parallel zueinander und senkrecht zu Vorder- und Rückseite verlaufende Längsseiten (144, 145) definiert und zwei Querseiten (146, 147), von denen mindestens eine nicht senkrecht zur Vorderseite ist, wobei die Längs- und Querseiten an die Vorderseite angrenzen, und dass der Applikator mehrere erste Druckdüsen (12) umfasst, deren Austrittsöffnungen (127) über die Vorderseite (142) des starren Körpers (14) verteilt sind, und mindestens eine zweite Druckdüse (12), deren Austrittsöffnung (127) sich an der Querseite (147) des starren Körpers befindet, die nicht senkrecht zur Vorderseite (142) ist, und dass die Anzahl der ersten Düsen von der Anzahl der zweiten Düse(n) verschieden ist.

3. Applikator nach Anspruch 2, **dadurch gekennzeichnet, dass** die beiden Ebenen (π127, π'127, π"127) untereinander und auf der Seite des starren Körpers (14) des Applikators (10) einen nicht rechten Winkel (α) zwischen 30° und 150°, vorzugsweise zwischen 60° und 120°, besonders bevorzugt gleich 60° oder 120°, bilden.

4. Applikator nach einem der vorhergehenden Ansprüche, **dadurch gekennzeichnet, dass** die Druckdüsen (12), die über die Vorder- und Querseiten (142, 146, 147) des starren Körpers (14) verteilt sind, vom gleichen Typ sind und Ausstoßöffnungen mit identischen Abmessungen (d127) haben.

5. Applikator nach einem der Ansprüche 1 bis 2, **dadurch gekennzeichnet, dass** die Druckdüsen (12), die über die Vorder- und Querseiten (142, 146, 147) des Körpers verteilt sind, vom gleichen Typ sind und auf jeder Seite Ausstoßöffnungen (127) mit identischen Abmessungen (d127) und zwischen zwei Seiten Ausstoßöffnungen mit unterschiedlichen Abmessungen (d127, d'127) aufweisen.

6. Applikator nach einem der vorhergehenden Ansprüche, **dadurch gekennzeichnet, dass** die Druckdüsen (12), die auf zwei verschiedenen Seiten des starren Körpers (14) verteilt sind, unabhängig voneinander aktiviert werden, wenn der Applikator (10) in Betrieb ist.

7. Applikator nach einem der vorhergehenden Ansprüche, **dadurch gekennzeichnet, dass** der starre Körper (14) einstückig ist.

8. Applikator nach einem der Ansprüche 1 bis 6, **dadurch gekennzeichnet, dass** der starre Körper (14) aus mehreren Teilen besteht, die starr zusammengefügt sind, ohne die Möglichkeit einer Relativbewegung zwischen ihnen.

9. Applikator nach einem der vorhergehenden Ansprüche zum Auftragen eines Zwei- oder Mehrkomponenten-Beschichtungsmaterials, **dadurch gekennzeichnet, dass** er einen Mischer umfasst, der in den starren Körper (14) des Applikators vor den Druckdüsen (12) integriert ist.

10. Anlage (I) zum Auftragen von Beschichtungsmaterial auf zu beschichtende Objekte (O), **dadurch gekennzeichnet, dass** sie mindestens einen Applikator (10) nach einem der vorhergehenden Ansprüche umfasst. Dieser ist vorzugsweise auf dem Arm (22) eines mehrachsigen Roboters (20) montiert, der dazu vorgesehen ist, ihn relativ zu den zu beschichtenden Objekten zu bewegen.

11. Verfahren zum Auftragen von Beschichtungsmaterial auf ein zu beschichtendes Objekt (O) mithilfe eines Applikators (10) nach einem der Ansprüche 1 bis 9, **dadurch gekennzeichnet, dass** es mindestens die folgenden Schritte umfasst, die in Folgendem bestehen:
a) Herstellen eines Musters (B) mit dem Beschichtungsmaterial, indem der Applikator (10) entlang einer ersten Bewegungsachse (F4, F4') bewegt wird, während erste Druckdüsen (12), die auf einer ersten Seite (142) des starren Körpers (14) des Applikators verteilt sind, aktiv sind; und
b) Herstellen mindestens eines Querrandes des Musters, indem der Applikator entlang einer zweiten Achse (F5, F5') senkrecht zur ersten Achse bewegt wird, während zweite Druckdüsen, die auf einer zweiten Seite (146, 147) des starren Körpers (14) verteilt sind, aktiv sind.

12. Verfahren nach Anspruch 11, **dadurch gekennzeichnet, dass** in den Schritten a) und/oder b) der Auftragungsabstand zwischen den Ausstoßöffnungen (127) der aktiven Druckdüsen (12) und der Oberfläche eines zu beschichtenden Objekts (O) zwischen 5 und 50 mm beträgt.

## Claims

1. A coating product applicator (10) comprising printing nozzles (12) each including an outlet channel (126) emerging in the downstream direction by a coating product discharge orifice (127), the printing nozzles (12) being distributed on at least two faces (142, 146, 147) of a body (14) of the applicator (10), the discharge orifices (127) of these nozzles extending along at least two nonparallel planes (π127, π'127, π"127), the applicator being **characterized in that** the rigid body is parallelepiped and defines a front face (142), a rear face (143) parallel to the front face, two parallel longitudinal faces (144, 145) perpendicular to the front and rear faces, and two parallel transverse faces (146, 147) perpendicular to the front, rear and longitudinal faces, the longitudinal and transverse faces being adjacent to the front face and **in that** the applicator comprises several first printing nozzles (12), the discharge orifices (127) of which are distributed on the first face (142) of the rigid body (14), and at least one second printing nozzle (12), the outlet orifice (127) of which is on a transverse face (146, 147) of the rigid body, and **in that** the number of first nozzles is different from the number of second nozzle(s).

2. A coating product applicator (10) comprising printing nozzles (12) each including an outlet channel (126) emerging in the downstream direction by a coating product discharge orifice (127), the printing nozzles (12) being distributed on at least two faces (142, 146, 147) of a body (14) of the applicator (10), the discharge orifices (127) of these nozzles extending along at least two nonparallel planes (π127, π'127, π"127), the applicator being **characterized in that** the rigid body is globally parallelepiped and defines a front face (142), a rear face (143) parallel to the front face, two parallel longitudinal faces (144, 145) perpendicular to the front and rear faces, and two parallel transverse faces (146, 147), at least one of these transverse faces being non-perpendicular to the front face, the longitudinal and transverse faces being adjacent to the front face and **in that** the applicator comprises several first printing nozzles (12), the discharge orifices (127) of which are distributed on the first face (142) of the rigid body (14), and at least one second printing nozzle (12), the outlet orifice (127) of which is on the transverse face (147) of the rigid body, which is non perpendicular to the front face (142) and **in that** the number of first nozzles is different from the number of second nozzle(s).

3. The applicator according to claim 1, **characterized in that** the two planes (π127, π'127, π"127) define, between them and on the side of the rigid body (14) of the applicator (10), a non-right angle an angle (α) of between 30° and 150°, preferably between 60° and 120°, preferably equal to 60° or 120°.

4. The applicator according to one of the preceding claims, **characterized in that** the printing nozzles (12) distributed on the front and transverse faces (142, 146, 147) of the rigid body are of the same type and have discharge orifices with identical dimensions (d127).

5. The applicator according to one of claims 1 to 3, **characterized in that** the printing nozzles (12) distributed on the front and transverse faces (142, 146, 147) of the body are of the same type and have, on each face, discharge orifices (127) with identical dimensions (d127) and, between two faces, discharge orifices with different dimensions (d127, d'127).

6. The applicator according to one of the preceding claims, **characterized in that** the printing nozzles (12) distributed on two separate faces of the body (14) are activated independently of one another when the applicator (10) is operating.

7. The applicator according to one of the preceding claims, **characterized in that** the rigid body (14) is monobloc.

8. The applicator according to one of claims 1 to 6, **characterized in that** the rigid body (14) is made up of several parts assembled rigidly, with no possibility of relative movement with respect to one another.

9. The applicator according to one of the preceding claims, intended for the application of a dual- or multi-component coating product, **characterized in that** it comprises a mixer integrated into the body (14) of the applicator, upstream from the printing nozzles (12).

10. An installation (I) for applying a coating product on objects (O) to be coated, which comprises at least one applicator (10) according to one of the preceding claims, preferably mounted on the arm (22) of a multiaxial robot (20) provided to move it relative to the objects to be coated.

11. A method for applying coating product on an object (O) to be coated, using an applicator (10) according to one of claims 1 to 9, **characterized in that** it comprises at least the following steps consisting of:
a) producing a pattern (B) with the coating product, by moving the applicator (10) along a first movement axis (F4, F4'), while first printing nozzles (12) distributed on a first face (142) of the body (14) of the applicator are active; and
b) making at least one transverse border of the pattern, by moving the applicator along a second axis (F5, F5') perpendicular to the first axis, while second printing nozzles distributed on a second face (146, 147) of the body are active.

12. The method according to claim 11, **characterized in that**, during steps a) and/or b), the application distance between the discharge orifices (127) of the active printing nozzles (12) and the surface of an object (O) in the process of being coated is between 5 and 50 mm.
